# EUROPEAN PATENT SPECIFICATION

(11) **EP 3 035 616 B1**
(45) Date of publication and mention of the grant of the patent: **18.10.2017**
(21) Application number: 15199328.4
(22) Date of filing: 10.12.2015
(51) Int. Cl.: H04L 12/801, H04L 12/859, H04W 24/02, H04W 84/04, H04W 88/02, H04W 88/08, H04L 12/24, H04L 12/851, H04W 72/12

(54) **A METHOD FOR PROVISIONING NON-REAL-TIME DATA**
VERFAHREN ZUR BEREITSTELLUNG VON NICHT-ECHTZEITDATEN
PROCÉDÉ POUR FOURNIR DES DONNÉES EN TEMPS NON RÉEL

(30) Priority: 19.12.2014 US 201414578190
(43) Date of publication of application: 22.06.2016
(73) Proprietor: Nokia Technologies Oy, 02610 Espoo (FI)
(72) Inventor: LUNDEN, Petteri, 02230 Espoo (FI); MOISIO, Martti, 01800 Klaukkala (FI); PRASAD, Athul, 00320 Helsinki (FI); UUSITALO, Mikko, 00200 Helsinki (FI)
(74) Representative: Seppo Laine Oy

(56) References cited:
- WO-A1-2014/028672
- CN-A- 103 974 328
- US-A1- 2013 024 555

## Description

### Field

The invention relates to communication networks, more specifically to provisioning non-real-time data in cellular networks.

### Background

The advent of cloud technology has raised the need to synchronize significantly large amounts of user data between user terminals and cloud storage points via fixed or wireless access networks. This typically involves low priority, non-real-time data traffic for synchronizing personal information such as pictures, videos, etc. to various social networking cloud servers, or retrieving e.g. software updates or other non-real-time content from the network (cloud server). The synchronization may also include high priority data traffic, such as corporate information generated by employees' working out of office, etc.

The cellular systems have not been designed for the efficient handling of cloud data, since the original design was primarily optimized for more real-time data traffic. Therefore, long-term handling of non-real time data that may originate from or terminate at the radio access network has not been properly designed in cellular systems. While some user terminal may include implementation specific mechanisms for short-term handling of such data, such solutions typically lead to non-uniform network operation, and as a result, to sub-optimal network performance. The cloud servers, even if being integrated with the cellular/core network, would still be unaware of the real-time coverage and capacity conditions of the user terminal. Moreover, without any assistance information from the core/radio access network entities, the user terminal would not be able to efficiently raise traffic routing requests.

Therefore, there is a need for an improved procedure for enabling more efficient and flexible handling of non-real-time user data.

Document WO2014/028672 discloses a method for efficient use of network bandwidth, wherein user content consumption is analysed, a prefetching schedule is provided for fetching of the content. Document US2013/024555 discloses prioritizing data packets associated with applications running in a networked computing environment, wherein a modification to a priority of a set of data is determined based on a comparison of current performance versus a specified performance, and an effect of the modification is evaluated. Document US2015/358858, stemming from document PCT/CN2014/091754, discloses cooperative communication, wherein when bandwidth of a first wireless network cannto meet bandwidth required by data to be sent, a first part of data is sent to a wireless network and a second part of data is sent to at least one core network.

### Summary

Now there has been invented an improved method and technical equipment implementing the method for at least alleviating the problems. Various aspects of the invention include a method, an apparatus, and a network element, which are characterized by what is stated in the independent claims. Various embodiments of the invention are disclosed in the dependent claims.

According to a first aspect, there is provided a method comprising: obtaining information, from a cloud server functionally connected to a cellular network that said cloud server comprises mobile terminated, MT, user data to at least one user equipment connected to a radio access network of said cellular network, said information comprising priority indication of said MT user data, determining, on the basis of said priority indication, delay tolerance and priority for at least one radio connection bearer for transmitting said MT user data, and providing at least one network element in said radio access network with information related to said delay tolerance and priority for said at least one radio connection bearer.

According to an embodiment, said at least one network element in said radio access network is a primary base station, MeNB, for said user equipment, and the method further comprises delaying, in response to the information related to said delay tolerance and priority indicating that said MT user data has a low priority, transmission of said MT user data until sufficient network resources are released from higher priority data traffic.

According to an embodiment, said user equipment is further connected a secondary base station, SeNB, and the method further comprises carrying out the transmission of said MT user data to said user equipment via said secondary base station, SeNB.

According to an embodiment, said information related to said delay tolerance and priority further comprises information related to expiration time for delivery of said MT user data.

According to an embodiment, said information related to said delay tolerance and priority further comprises a handover indicator for low priority MT user data, and the method further comprises transmitting, upon the user equipment performing a handover from the first primary base station to a second primary base station, said information related to said delay tolerance and priority and the handover indicator to the second primary base station, and in response to the second primary base station providing sufficient network resources for transmitting the low priority MT user data, establishing a radio connection bearer between the second primary base station and the user equipment for initiating delivery of the low priority MT user data from the cloud server.

According to an embodiment, said information related to said delay tolerance and priority is stored in a control plane network entity of the cellular network, such as in a mobility management entity, MME.

According to an embodiment, said user equipment determines, on the basis of said information obtained from the cloud server, the delay tolerance and the priority for the at least one radio connection bearer for transmitting said MT user data, and sends the information related to the delay tolerance and the priority for the at least one radio connection bearer to the primary base station upon requesting transmission of said MT user data.

According to a second aspect, there is provided an apparatus comprising at least one processor, memory including computer program code, the memory and the computer program code configured to, with the at least one processor, cause the apparatus to at least: obtain information from a cloud server functionally connected to a cellular network that said cloud server comprises mobile terminated, MT, user data to said apparatus, and obtain information related to delay tolerance and priority for at least one radio connection bearer for receiving said MT user data via a network element of a radio access network of said cellular network.

According to a third aspect, there is provided a network element of a radio access network configured to obtain information from a cloud server functionally connected to a cellular network that said cloud server comprises mobile terminated (MT) user data to a user equipment, and obtain information related to delay tolerance and priority for at least one radio connection bearer for transmitting said MT user data to said user equipment.

These and other aspects of the invention and the embodiments related thereto will become apparent in view of the detailed disclosure of the embodiments further below.

### List of drawings

In the following, various embodiments of the invention will be described in more detail with reference to the appended drawings, in which
- Figs. 1a and 1b: show a system and devices suitable to be used in a cloud service system according to an embodiment;
- Fig. 2: shows a simplified network structure for illustrating the embodiments;
- Fig. 3: shows a flow chart of a data provisioning method according to an embodiment;
- Fig. 4: illustrates various embodiments for providing a RAN element with information about delay tolerance and priority for downlink radio connection bearer; and
- Fig. 5: illustrates various embodiments for providing a RAN element with information about delay tolerance and priority for uplink radio connection bearer.

### Description of embodiments

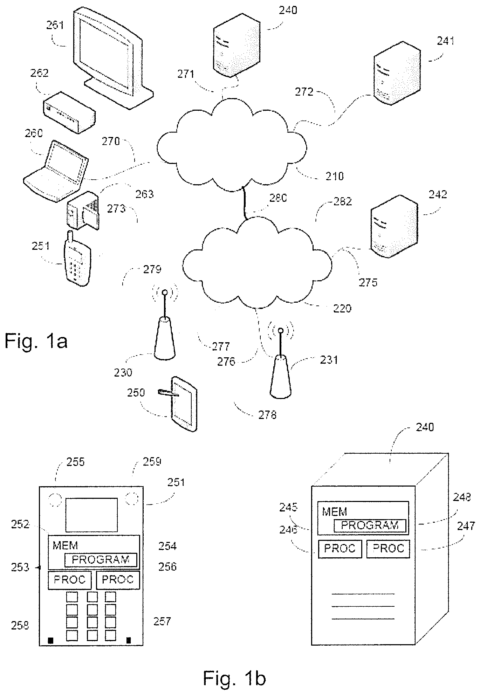

Figs. 1 a and 1b show a system and devices suitable to be used in a cloud service system according to an embodiment. In Fig. 1a, the different devices may be connected via a fixed network 210 such as the Internet or a local area network; or a mobile communication network 220 such as the Global System for Mobile communications (GSM) network, 3rd Generation (3G) network, 3.5th Generation (3.5G) network, 4th Generation (4G) network, 5th Generation (5G) network Wireless Local Area Network (WLAN), Bluetooth®, or other contemporary and future networks. Different networks are connected to each other by means of a communication interface 280. The networks comprise network elements such as routers and switches to handle data (not shown), and communication interfaces such as the base stations 230 and 231 in order for providing access for the different devices to the network, and the base stations 230, 231 are themselves connected to the mobile network 220 via a fixed connection 276 or a wireless connection 277.

There may be a number of servers connected to the network, and in the example of Fig. 1a are shown servers 240, 241 and 242, each connected to the mobile network 220, which servers may be arranged to operate as computing nodes (i.e. to form a cluster of computing nodes or a so-called server farm) for the system. Some of the above devices, for example the servers 240, 241, 242 may be such that they are arranged to make up a connection to the Internet with the communication elements residing in the fixed network 210. The elements of the system may be implemented as a software component residing on one network device or distributed across several network devices 240, 241, 242, for example so that the devices form a so-called cloud.

It needs to be understood that different embodiments allow different parts to be carried out in different elements. For example, parallelized processes of the cloud service system may be carried out in one or more network devices 240, 241, 242.

There are also a number of end-user devices such as mobile phones and smart phones 251, Internet access devices (Internet tablets) 250, personal computers 260 of various sizes and formats, televisions and other viewing devices 261, video decoders and players 262, as well as video cameras 263 and other encoders. These devices 250, 251, 260, 261, 262 and 263 can also be made of multiple parts. The various devices may be connected to the networks 210 and 220 via communication connections such as a fixed connection 270, 271, 272 and 280 to the internet, a wireless connection 273 to the internet 210, a fixed connection 275 to the mobile network 220, and a wireless connection 278, 279 and 282 to the mobile network 220. The connections 271-282 are implemented by means of communication interfaces at the respective ends of the communication connection.

Fig. 1b shows devices for a cloud service system according to an example embodiment. As shown in Fig. 1b, the server 240 contains memory 245, one or more processors 246, 247, and computer program code 248 residing in the memory 245 for implementing, for example, a cloud service system. The different servers 241, 242 may contain at least these elements for employing functionality relevant to each server.

Similarly, the end-user device 251 contains memory 252, at least one processor 253 and 256, and computer program code 254 residing in the memory 252 for implementing various processes of the end-user device. The apparatus 251 may comprise radio interface circuitry connected to the processor 253, 256 and suitable for generating wireless communication signals for example for communication with a cellular communications network, a wireless communications system or a wireless local area network. The apparatus 251 may further comprise an antenna connected to the radio interface circuitry for transmitting radio frequency signals generated at the radio interface circuitry to other apparatus(es) and for receiving radio frequency signals from other apparatus(es). The apparatus may also have one or more cameras 255 and 259 for capturing image data, for example stereo video. The end-user device may also contain one, two or more microphones 257 and 258 for capturing sound. The different end-user devices 250, 260 may contain at least these same elements for employing functionality relevant to each device.

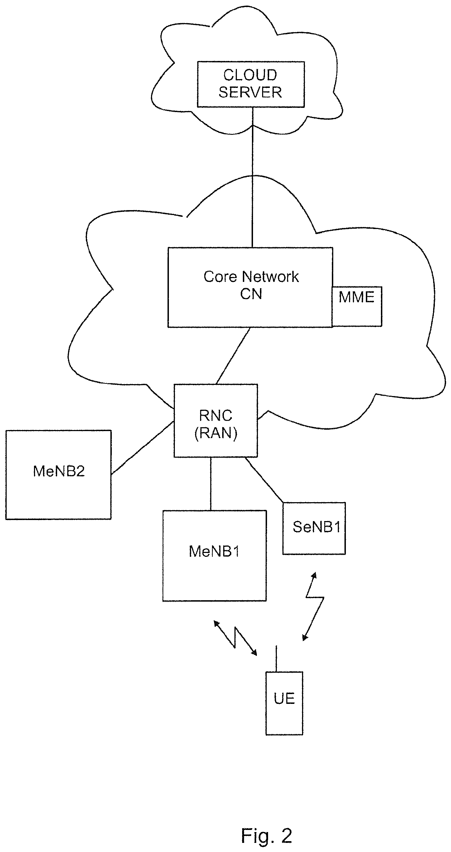

Figure 2 shows a simplified network structure for illustrating the embodiments of the cloud service system. The cloud server, such as one or more the servers 240, 241, 242 in Figure 1a, is functionally connected to a core network CN of a cellular system. The cellular system may be any contemporary and future network, but herein reference is made, for exemplary reasons, to 3G/4G/5G networks standardized under the 3GPP (3^{rd} Generation Partnership Project) standards.

The core network CN comprises a plurality of network elements and gateways for routing real-time and non-real-time data to and from various access networks and for carrying out control plane functionalities related thereto. One control plane functionality is the Mobility Management Entity (MME). The core network CN is typically connected to a plurality of Radio Access Networks (RAN), each of which comprising one or more Radio Network Controllers (RNC). Only one RNC in one RAN is shown in Figure 2 for simplifying the illustration. A plurality of base stations, referred to as enhanced Node-B (eNB), is typically connected to the RNC. An enhanced Node-B contains one or more cells, the cell being a basic unit to which user equipment (UE) has wireless access via a radio interface.

Dual connectivity technology, related to which UEs can connect to master and secondary eNBs (MeNB and SeNB), is currently being standardized as part of 3GPP LTE release 13 specifications. The dual connectivity technology also enables separation of control and user planes in a cellular network, with the MeNB providing the control and data plane connectivity, and the SeNB being used to provide data plane capacity enhancements. Figure 2 shows a first master eNB (MeNB1) and its secondary eNB (SeNB1) and a second master eNB (MeNB2), all connected to the same RNC.

The cellular systems have not been designed for the efficient handling of cloud data, since the original design was primarily optimized for more real-time data traffic. Therefore, long-term handling of non-real time data that may originate from or terminate at the radio access network has not been properly designed in cellular systems. While some user terminal may include implementation specific mechanisms for short-term handling of such data, such solutions typically lead to non-uniform network operation, and as a result, to sub-optimal network performance. The cloud servers, even if being integrated with the cellular/core network, would still be unaware of the real-time coverage and capacity conditions of the user terminal. Moreover, without any assistance information from the core/radio access network entities, the user terminal would not be able to efficiently raise traffic routing requests.

In order to alleviate these problems, a new method for for enabling more efficient and flexible handling of non-real-time user data is presented herein.

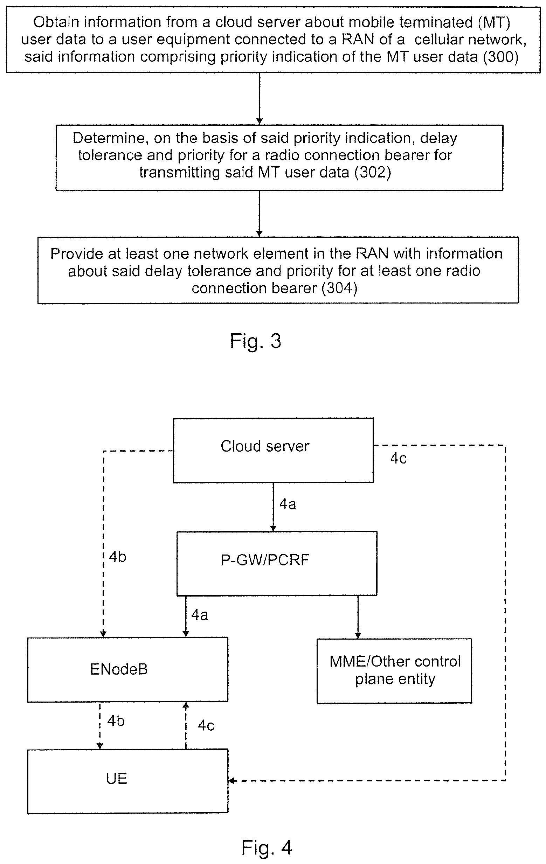

A method according to a first aspect and various embodiments related thereto are now described by referring to the flow chart of Figure 3 describing the operation for providing a network element of radio access network with assistance information for handling especially delay tolerant data more efficiently.

In the method, information is obtained (300) either from a cloud server functionally connected to a cellular network that said cloud server comprises mobile terminated (MT) user data to at least one user equipment connected to a radio access network of said cellular network, said information comprising priority indication of said MT user data. On the basis of said priority indication, delay tolerance and priority for at least one radio connection bearer for transmitting said MT user data is determined (302), and at least one network element in said radio access network is provided (304) with information related to said delay tolerance and priority for said at least one radio connection bearer.

Thus, the cloud server is provided with more control over how delay tolerant user data is efficiently delivered to end users. The cloud server may include the priority indication of said MT user data, for example, in a specific packet header field.

Figure 4 illustrates various embodiments for providing at least one network element in said radio access network with information about said delay tolerance and priority for at least one radio connection bearer.

According to an embodiment, a core network element of the cellular network determines the delay tolerance and the priority for the at least one radio connection bearer for transmitting said MT user data. An example of this embodiment is illustrated in Figure 4 as the arrows 4a, where said core network element is Packet Data Network Gateway (P-GW) and/or Policy and Charging Rules Function (PCRF). The P-GW/PCRF determines the delay tolerance and the priority for at least one radio connection bearer for transmitting said MT user data on the basis of said priority indication obtained (4a) from the cloud server. Then the core network, while setting up the bearers and other related control signaling information, informs (4a) the radio access network about the priority and delay tolerance of said MT user data.

According to an alternative embodiment, said at least one network element in said radio access network determines the delay tolerance and the priority for the at least one radio connection bearer for transmitting said MT user data. An example of this embodiment is illustrated in Figure 4 as the arrows 4b, where the network element in said radio access network is a base station, such as an enhanced Node-B (eNB). According to an embodiment, the eNB may determine the delay tolerance and the priority using methods of deep packet inspection (DPI) and traffic type determination. The delay tolerance and the priority information are then signaled (4b) to the user equipment UE.

According to yet an alternative embodiment, said user equipment determines, on the basis of said information obtained from the cloud server, the delay tolerance and the priority for the at least one radio connection bearer for transmitting said MT user data, and sends the information about the delay tolerance and the priority for the at least one radio connection bearer to the base station upon requesting transmission of said MT user data. An example of this embodiment is illustrated in Figure 4 as the arrows 4c, where the user equipment UE obtains the priority information directly from the cloud server, e.g. as application-specific signaling, where the cloud server and the user equipment UE use a common application for mutually synchronizing the user data. Such signaling may be transparent to the cellular network. After determining the delay tolerance and the priority for the at least one radio connection bearer, the user equipment UE sends the information to the primary base station upon requesting transmission of said MT user data. Sending the information may be carried out e.g. along requesting uplink resource and scheduling from the base station.

Regardless of which of the above embodiments is used for providing at least one network element in said radio access network with information about said delay tolerance and priority for at least one radio connection bearer, any of the following embodiments may nevertheless be carried out.

According to an embodiment, said at least one network element in said radio access network is a primary base station (MeNB) for said user equipment, and the method further comprises delaying, in response to the information about said delay tolerance and priority indicating that said MT user data has a low priority, transmission of said MT user data until sufficient network resources are released from higher priority data traffic.

Thus, a presumption here is that the user equipment UE has a significant amount of delay tolerant MT user data, and possibly mobile-originated (MO) user data, such as a backup, synchronization of photos between the UE and cloud, etc. Carrying out the data transfer may require a lot of energy, especially if performed over a weak or congested connection. Accordingly, when the delay tolerance allows, it is advisable to transfer this data as power- and resource-efficiently as possible. Thus, it may be beneficial to delay the transfer until the UE has a high capacity connection available, even if there would be an option to initiate the transfer immediately.

According to an embodiment, in response to waiting for the sufficient network resources, the user equipment may be provided with a signaling for transferring the UE to an IDLE mode or any other downgraded connection mode regarding radio resources.

It is generally known that in many access schemes, such as in the WCDMA access scheme used in 3G/4G/5G systems or various OFMDA access schemes used, for example, in 4G/5G systems and in various WLAN systems, the user equipment UE operates either in a connected mode or in an idle mode from the RRC (Radio Resource Control) layer point of view. The connected mode is further divided into service states, which define what kind of physical channel the UE is using.

When the UE is switched on, it operates in the idle mode by selecting a suitable cell of appropriate PLMN (Public Land Mobile Network), and then tunes into its control channel, i.e. the UE "camps on a cell". The UE remains in the idle mode until it transmits a request to establish an RRC connection, which, if successful, transits the UE into the connected mode.

From the idle mode, the UE may transit into the Cell_DCH state or the Cell_FACH state of the connected mode. In the Cell_DCH state, a dedicated physical channel (DCH) is allocated to the UE. The UE uses the DCH in its user data and control information transmission. In the Cell_FACH state the UE uses either the forward access channel (FACH) or the random access channel (RACH) for transmitting both signalling messages and small amounts of user plane data. From the Cell_FACH state the UE may further transit into the Cell_PCH state or the URA_PCH state to minimise the battery consumption, whereby the UE can only be reached via the paging channel (PCH). In the Cell_PCH state, the UE is identified on a cell level in the serving RNC, but in URA_PCH state only on UTRAN Registration Area (URA) level. The UE leaves the connected mode and returns to the idle mode when the RRC connection is released or failed.

Herein, the downgraded connection mode may refer to any connection mode with reduced power consumption, such as the idle mode, a standby mode or a disconnected mode.

Enabling the UE to enter in the idle mode or any other downgraded connection mode as frequently as possible is a very important functionality in Radio Access Networks. From the UE point of view, it saves valuable UE battery life, by reducing the power consumption of the cellular radio RF unit, but allowing it to enter an energy saving state. From the RAN point of view, it reduces the complexity in the access network by removing the context of the UE from the eNB, and updating the same at the MME such that the eNB can minimize control signaling towards the UE, while accepting new RRC connections from other UEs, which could have more valuable/higher priority traffic awaiting to be delivered. It also enables operators to optimize the network by providing maximum connectivity to a multitude of UEs, with the limited amount of network resources available.

According to an embodiment, said user equipment is further connected a secondary base station (SeNB), and the method further comprises carrying out the transmission of said MT user data to said user equipment via said secondary base station (SeNB). Herein, the dual connectivity technology as described above is utilized such that the traffic delayed at the master MeNB can be scheduled to be transmitted only or at least partially via the secondary SeNB. The secondary SeNB may be, for example, a small cell base station, pico eNB, home eNB or a base station for WiFi/WLAN network. Thus, the dual connectivity architecture is utilized in enabling more flexible and efficient routing of traffic over at least the secondary access node in the case where the primary access node does not have sufficient resources for delivering low priority data.

According to an embodiment, said information about said delay tolerance and priority further comprises information about expiration time for delivery of said MT user data. This kind of information may involve time metrics, such as seconds, minutes or even hours, which enables the eNB to schedule the traffic when low load or other suitable conditions arises within the expiration time.

According to an embodiment, said information about said delay tolerance and priority further comprises information about cell types or cell identities via which said MT user data can be transmitted to the user equipment. Thus, the cloud server may inform the UE regarding the cell types or cell IDs (e.g. physical cell ID, cell global ID, etc.), from which the low priority traffic could be sent, and/or also regarding the low priority non-real-time data awaiting delivery for the UE at the cloud server. The cell types or IDs may also refer to other access networks, such as WiFi/WLAN etc.

It is noted that both the information about expiration time for delivery of said MT user data and the information about the cell types or cell identities for transmitting said MT user data may be used in guiding the UE to enter in the idle mode. Thus, the UE may be signaled to enter in the idle mode, for example, if sufficient network resources are not currently available and the expiration time indicates that the delivery of the MT user data can be postponed to a later moment. Similarly, if the current cell type or cell identity of the UE does not correspond to the information about the cell types or cell identities for transmitting said MT user data, the UE may be signaled to enter in the idle mode until the UE finds an appropriate cell type or cell identity.

According to an embodiment, said information about said delay tolerance and priority further comprises a handover indicator for low priority MT user data, and the method further comprises transmitting, upon the user equipment performing a handover from the first primary base station to a second primary base station, said information about said delay tolerance and priority and the handover indicator to the second primary base station, and in response to the second primary base station providing sufficient network resources for transmitting the low priority MT user data, establishing a radio connection bearer between the second primary base station and the user equipment for initiating delivery of the low priority MT user data from the cloud server.

Hence, a new indicator may be defined for informing the target eNB about the possible low priority data available at the cloud data server for the UE, when the UE carries out a handover. If the target eNB satisfies the conditions needed for delivering the low priority data, the target eNB may initiate a new bearer and related control signaling with the cloud server for starting the downlink data traffic delivery. As a result, the need for excessive buffering of the low priority data at the eNB and core network gateways may be decreased.

According to an embodiment, said information about said delay tolerance and priority is stored in a control plane network entity of the cellular network, such as in a mobility management entity (MME). This ensures that the information is available even if the UE enters in idle mode while the delay tolerant data is waiting at the cloud data server. The control plane entities may even page the UE, prompting it to enter connected state if the expiration time of the delay tolerant data approaches, thereby ensuring that the data is delivered to the end user in a timely manner.

According to an embodiment, the user equipment UE is provided with information about delay tolerance and priority for at least one radio connection bearer for transmitting mobile originated (MO) user data.

Accordingly, similarly to the downlink data from the cloud server to the user equipment, delay tolerance and priority for at least one radio connection bearer may be defined for uplink data, i.e. for transmitting mobile originated (MO) user data from the UE to the cloud server.

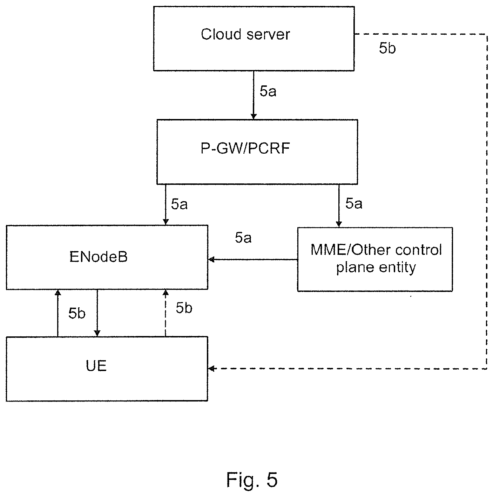

Figure 5 illustrates various embodiments for providing the UE with information about delay tolerance and priority for at least one radio connection bearer for transmitting MO user data.

According to an embodiment, similarly to the case 4a in Figure 4, the P-GW/PCRF determines the delay tolerance and the priority for at least one radio connection bearer for transmitting said MO user data on the basis of priority indication obtained (5a) from the cloud server. Then the core network informs (5a), transparently to the radio access network, the UE about the priority and delay tolerance of said MO user data. The signaling may also be carried out by a control plane entity, such as the MME.

According to another embodiment, similarly to the case 4c in Figure 4, the UE determines, on the basis of said information obtained (5c) from the cloud server, the delay tolerance and the priority for the at least one radio connection bearer for transmitting said MO user data, and sends (5c) information about the MO user data waiting for uplink transmission to the base station upon requesting transmission of said MO user data. Herein, the information about the delay tolerance and the priority for the at least one radio connection bearer may be sent to the base station.

Since uplink traffic requests are controlled by the UE with assistance information from the network, both of the above embodiment provide the UE with sufficient information for facilitating the network prioritize delay tolerant uplink user data. The application layer uplink traffic priority information may also include, similarly to downlink information, network specific information regarding the delay tolerance and cell ID information from which the data could be scheduled. Since the UE conducts required measurements during idle and connected state, it enables the UE to enter in idle state even with possible non-real-time uplink data to be scheduled. If the UE enters in idle state, when the delay tolerance expiration time approaches its expiry period, the UE may enter in connected state and request for real-time data traffic bearers. For providing the UE with the cell IDs or cell types through which the data could be sent, the network may set the priorities of certain cells as low. The cells with a low priority may primarily be used for sending delay tolerant traffic types, and higher priority cells may be used if the delay constraint is close to being met.

According to an embodiment, the UE may configure traffic priorities upon sending uplink buffer status reports to the eNB, and the new priority levels may provide the eNB with sufficient information to schedule resources for the delay tolerant uplink traffic accordingly. The information may be application specific, or even traffic type specific.

According to an embodiment, if the delay tolerance of the uplink traffic is configured by core network entities, such as P-GW/PCRF, the configurations may be pushed to the UE periodically. The configurations may be sent to the UE, for example, using third party or proprietary interfaces, such as Open Mobile Alliance - Device Management (OMA-DM) or other device manufacturer specific applications.

According to an embodiment, for both downlink and uplink data traffic, UE mobility patterns may be used in delaying the transmission of the user data. Even though the nature of wireless communication evidently raises a plurality of unpredictable issues, a reasonable estimate whether delaying is beneficial from power efficiency point of view may still be made on the basis of UE mobility pattern information. For example, this can be based on comparing the current power efficiency of the UE to the average power efficiency (history information). If the current power efficiency is below the average and the delay budget/tolerance allows, the non-urgent transmission may be delayed.

A more refined method may involve e.g. the cell type. For example, let us consider that the power efficiency of the current macro cell for the UE is low, which results in high UE transmit power, high load in the cell, which leads to small capacity allocations per UE, which in turn causes that a large number of transmissions/Mb is needed. However, if it is known from the history information that the UE typically connects to small cells several times a day, or that the UE typically resides within small cell coverage around 6 PM, or that the UE is within small cell coverage 80% of the time, the transmission may be delayed until to an expected coverage of a small cell, provided that the delay tolerance allows.

A skilled man appreciates that any of the embodiments described above may be implemented as a combination with one or more of the other embodiments, unless there is explicitly or implicitly stated that certain embodiments are only alternatives to each other.

The various embodiments may provide advantages over the state of the art. For example, the embodiments may provide better control over network performance. Further, the embodiments may enable efficient scheduling of delay tolerant data. Especially, they may provide the cloud server with more control over how delay tolerant user data is efficiently delivered to end users. Moreover, UEs may enter idle mode, engage in handovers, etc., while delay tolerant data is present at the UE or cloud server.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, or CD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention.

## Claims

1. A method comprising:
obtaining (300) information, from a cloud server functionally connected to a cellular network that said cloud server comprises mobile terminated, MT, user data to at least one user equipment connected to a radio access network of said cellular network, said information comprising priority indication of said MT user data,
**characterized by**
determining (302), on the basis of said priority indication, delay tolerance and priority for at least one radio connection bearer for transmitting said MT user data; and
providing (304) at least one network element in said radio access network with information related to said delay tolerance and priority for said at least one radio connection bearer.

2. A method according to claim 1, wherein said at least one network element in said radio access network is a primary base station, MeNB, for said user equipment, the method further comprising
delaying, in response to the information related to said delay tolerance and priority indicating that said MT user data has a low priority, transmission of said MT user data until sufficient network resources are released from higher priority data traffic.

3. A method according to claim 2, wherein said user equipment is further connected to a secondary base station, SeNB, the method further comprising
carrying out the transmission of said MT user data to said user equipment via said secondary base station, SeNB.

4. A method according to claim 1, wherein said information related to said delay tolerance and priority further comprises information about expiration time for delivery of said MT user data.

5. A method according to claim 1, wherein said information related to said delay tolerance and priority further comprises a handover indicator for low priority MT user data, the method further comprising
transmitting, upon the user equipment performing a handover from the first primary base station to a second primary base station, said information related to said delay tolerance and priority and the handover indicator to the second primary base station, and
in response to the second primary base station providing sufficient network resources for transmitting the low priority MT user data, establishing a radio connection bearer between the second primary base station and the user equipment for initiating delivery of the low priority MT user data from the cloud server.

6. A method according to claim 1, wherein said information related to said delay tolerance and priority is stored in a control plane network entity of the cellular network, such as in a mobility management entity, MME.

7. A method according to claim 1, further comprising said user equipment
determining, on the basis of said information obtained from the cloud server, the delay tolerance and the priority for the at least one radio connection bearer for transmitting said MT user data; and
sending the information related to the delay tolerance and the priority for the at least one radio connection bearer to the primary base station upon requesting transmission of said MT user data.

8. An apparatus (251) comprising at least one processor (253, 256), a memory (252) including computer program code (254), the memory (252) and the computer program code (254) configured to, with the at least one processor (253, 256), cause the apparatus (251) to at least:
obtain information from a cloud server functionally connected to a cellular network that said cloud server comprises mobile terminated, MT, user data to said apparatus,
**characterized by** the apparatus being configured to:
obtain information related to delay tolerance and priority for at least one radio connection bearer for receiving said MT user data via a network element of a radio access network of said cellular network.

9. An apparatus (251) according to claim 8, wherein said apparatus (251) is configured to receive said MT user data via a primary base station, MeNB, of the radio access network, wherein
reception of said MT user data is delayed, in response to the information related to said delay tolerance and priority indicating that said MT user data has a low priority, until sufficient network resources are released from higher priority data traffic.

10. An apparatus (251) according to claim 8, wherein said information related to said delay tolerance and priority further comprises information about expiration time for delivery of said MT user data.

11. An apparatus (251) according to claim 8, wherein said information related to said delay tolerance and priority further comprises information related to cell types or cell identities via which the apparatus can receive said MT user data.

12. A network element (230, 231, CN) of a radio access network configured to
obtain information from a cloud server functionally connected to a cellular network that said cloud server comprises mobile terminated, MT, user data to a user equipment,
**characterized by** the network element being configured to
obtain information related to delay tolerance and priority for at least one radio connection bearer for transmitting said MT user data to said user equipment.

13. A network element (230, 231, CN) according to claim 12, wherein said network element comprises a primary base station, MeNB, (230) for said user equipment, the network element (230, 231, CN) being configured to
delay the transmission of said MT user data, in response to the information related to said delay tolerance and priority indicating that said MT user data has a low priority, until sufficient network resources are released from higher priority data traffic.

14. A network element (230, 231, CN) according to claim 12, wherein the network element is configured to
determine, on the basis mobility patterns of the user equipment, assistance information for delaying the transmission of MT/MO user data.

15. A network element (230, 231, CN) according to claim 12, wherein the network element (230, 231, CN) is configured to
provide, in response to waiting for the sufficient network resources for the transmission of MT/MO user data, the user equipment with a signaling for transferring the user equipment into a downgraded connection mode regarding radio resources; and
upgrade the connection mode or establish a new radio connection bearer for the transmission of MT/MO user data when sufficient network resources are available.

## Patentansprüche

1. Verfahren, das Folgendes umfasst:
Erhalten (300) von Informationen von einem Cloudserver, der funktional mit einem zellularen Netzwerk verbunden ist, dass der Cloudserver Mobile-Terminated-(MT)-Benutzerdaten für mindestens eine Teilnehmereinrichtung umfasst, die mit einem Funkzugangsnetzwerk des zellularen Netzwerks verbunden ist, wobei die Informationen eine Prioritätsanzeige der MT-Benutzerdaten umfassen,
**gekennzeichnet durch**
Bestimmen (302) auf Basis der Prioritätsanzeige einer Verzögerungstoleranz und Priorität für mindestens einen Funkverbindungsträger zum Übertragen der MT-Benutzerdaten und
Bereitstellen (304) mindestens eines Netzwerkelements im Funkzugangsnetzwerk mit Informationen, die auf die Verzögerungstoleranz und Priorität für den mindestens einen Funkverbindungsträger bezogen sind.

2. Verfahren nach Anspruch 1, wobei das mindestens eine Netzwerkelement im Funkzugangsnetzwerk eine primäre Basisstation, MeNB, für die Teilnehmereinrichtung ist, wobei das Verfahren ferner Folgendes umfasst
in Reaktion darauf, dass die Informationen, die auf die Verzögerungstoleranz und Priorität bezogen sind, anzeigen, dass die MT-Benutzerdaten eine niedrige Priorität aufweisen, Verzögern der Übertragung der MT-Benutzerdaten, bis vom Datenverkehr höherer Priorität ausreichende Netzwerkressourcen freigegeben sind.

3. Verfahren nach Anspruch 2, wobei die Teilnehmereinrichtung ferner mit einer sekundären Basisstation, SeNB, verbunden ist, wobei das Verfahren ferner Folgendes umfasst
Ausführen der Übertragung der MT-Benutzerdaten zur Teilnehmereinrichtung über die sekundäre Basisstation, SeNB.

4. Verfahren nach Anspruch 1, wobei die Informationen, die auf die Verzögerungstoleranz und Priorität bezogen sind, ferner Informationen über eine Ablaufzeit für die Zustellung der MT-Benutzerdaten umfassen.

5. Verfahren nach Anspruch 1, wobei die Informationen, die auf die Verzögerungstoleranz und Priorität bezogen sind, ferner eine Weiterreichungsanzeige für MT-Benutzerdaten niedriger Priorität umfassen, wobei das Verfahren ferner Folgendes umfasst
nachdem die Teilnehmereinrichtung eine Weiterreichung von der ersten primären Basisstation zu einer zweiten primären Basisstation durchgeführt hat, Übertragen der Informationen, die auf die Verzögerungstoleranz und Priorität bezogen sind, und der Weiterreichungsanzeige zur zweiten primären Basisstation und
in Reaktion darauf, dass die zweite primäre Basisstation ausreichend Netzwerkressourcen zum Übertragen der MT-Benutzerdaten niedriger Priorität bereitstellt, Einrichten eines Funkverbindungsträgers zwischen der zweiten primären Basisstation und der Teilnehmereinrichtung zum Initiieren einer Zustellung der MT-Benutzerdaten niedriger Priorität vom Cloudserver.

6. Verfahren nach Anspruch 1, wobei die Informationen, die auf die Verzögerungstoleranz und Priorität bezogen sind, in einer Netzwerkentität auf Steuerebene des zellularen Netzwerks gespeichert sind, wie etwa in einer Mobilitätsverwaltungsentität, MME.

7. Verfahren nach Anspruch 1, das ferner die folgenden von der Teilnehmereinrichtung durchgeführten Schritte umfasst
auf Basis der vom Cloudserver erhaltenen Informationen Bestimmen der Verzögerungstoleranz und der Priorität für den mindestens einen Funkverbindungsträger zum Übertragen der MT-Benutzerdaten und
Senden der Informationen, die auf die Verzögerungstoleranz und die Priorität für den mindestens einen Funkverbindungsträger bezogen sind, an die primäre Basisstation, nachdem die Übertragung der MT-Benutzerdaten angefordert wurde.

8. Vorrichtung (251), die mindestens einen Prozessor (253, 256), einen Speicher (252) umfasst, der Computerprogrammcode (254) beinhaltet, wobei der Speicher (252) und der Computerprogrammcode (254) dazu ausgelegt sind, mit dem mindestens einen Prozessor (253, 256) zu bewirken, dass die Vorrichtung (251) mindestens:
Informationen von einem Cloudserver erhält, der funktional mit einem zellularen Netzwerk verbunden ist, dass der Cloudserver Mobile-Terminated-(MT)-Benutzerdaten für die Vorrichtung umfasst,
**dadurch gekennzeichnet, dass** die Vorrichtung dazu ausgelegt ist:
Informationen, die auf eine Verzögerungstoleranz und Priorität für mindestens einen Funkverbindungsträger bezogen sind, zum Empfangen der MT-Benutzerdaten über ein Netzwerkelement eines Funkzugangsnetzwerks des zellularen Netzwerks zu erhalten.

9. Vorrichtung (251) nach Anspruch 8, wobei die Vorrichtung (251) dazu ausgelegt ist, die MT-Benutzerdaten über eine primäre Basisstation, MeNB, des Funkzugangsnetzwerks zu empfangen, wobei
in Reaktion darauf, dass die Informationen, die auf die Verzögerungstoleranz und Priorität bezogen sind, anzeigen, dass die MT-Benutzerdaten eine niedrige Priorität aufweisen, der Empfang der MT-Benutzerdaten verzögert wird, bis vom Datenverkehr höherer Priorität ausreichende Netzwerkressourcen freigegeben sind.

10. Vorrichtung (251) nach Anspruch 8, wobei die Informationen, die auf die Verzögerungstoleranz und Priorität bezogen sind, ferner Informationen über eine Ablaufzeit für die Zustellung der MT-Benutzerdaten umfassen.

11. Vorrichtung (251) nach Anspruch 8, wobei die Informationen, die auf die Verzögerungstoleranz und Priorität bezogen sind, ferner Informationen zu Zelltypen oder Zellidentitäten umfassen, über die die Vorrichtung die MT-Benutzerdaten empfangen kann.

12. Netzwerkelement (230, 231, CN) eines Funkzugangsnetzwerks, das dazu ausgelegt ist
Informationen von einem Cloudserver zu erhalten, der funktional mit einem zellularen Netzwerk verbunden ist, dass der Cloudserver Mobile-Terminated-(MT)-Benutzerdaten für eine Teilnehmereinrichtung Benutzerdaten umfasst, **dadurch gekennzeichnet, dass** das Netzwerkelement dazu ausgelegt ist:
Informationen, die auf eine Verzögerungstoleranz und Priorität für mindestens einen Funkverbindungsträger bezogen sind, zum Übertragen der MT-Benutzerdaten zur Teilnehmereinrichtung zu erhalten.

13. Netzwerkelement (230, 231, CN) nach Anspruch 12, wobei das Netzwerkelement eine primäre Basisstation, MeNB, (230) für die Teilnehmereinrichtung, wobei das Netzwerkelement (230, 231, CN) dazu ausgelegt ist
in Reaktion darauf, dass die Informationen, die auf die Verzögerungstoleranz und Priorität bezogen sind, anzeigen, dass die MT-Benutzerdaten eine niedrige Priorität aufweisen, die Übertragung der MT-Benutzerdaten zu verzögern, bis vom Datenverkehr höherer Priorität ausreichende Netzwerkressourcen freigegeben sind.

14. Netzwerkelement (230, 231, CN) nach Anspruch 12, wobei das Netzwerkelement dazu ausgelegt ist
auf Basis von Mobilitätsmustern der Teilnehmereinrichtung Unterstützungsinformationen zum Verzögern der Übertragung von MT/MO-Benutzerdaten zu bestimmen.

15. Netzwerkelement (230, 231, CN) nach Anspruch 12, wobei das Netzwerkelement (230, 231, CN) dazu ausgelegt ist
in Reaktion auf das Warten auf die ausreichenden Netzwerkressourcen zur Übertragung der MT/MO-Benutzerdaten der Teilnehmereinrichtung eine Signalisierung zum Transferieren der Teilnehmereinrichtung in einen hinsichtlich Funkressourcen herabgestuften Verbindungsmodus bereitzustellen und
den Verbindungsmodus hochzustufen oder einen neuen Funkverbindungsträger für die Übertragung der MT/MO-Benutzerdaten einzurichten, wenn ausreichende Netzwerkressourcen verfügbar sind.

## Revendications

1. Procédé, comprenant l'étape consistant à :
obtenir (300) des informations, à partir d'un serveur cloud relié fonctionnellement à un réseau cellulaire de telle sorte que ledit serveur cloud comprend des données d'utilisateur aboutissant à un mobile, MT, relatives à au moins un équipement d'utilisateur connecté à un réseau d'accès radio dudit réseau cellulaire, lesdites informations comprenant une indication de priorité desdites données d'utilisateur MT,
**caractérisé par** les étapes consistant à
déterminer (302), sur la base de ladite indication de priorité, une tolérance de retard et une priorité pour au moins un support de liaison radio pour transmettre lesdites données d'utilisateur MT; et
fournir (304) à au moins un élément de réseau dans ledit réseau d'accès radio des informations relatives à ladite tolérance de retard et à ladite priorité pour ledit au moins un support de liaison radio.

2. Procédé selon la revendication 1, dans lequel ledit au moins un élément de réseau dans ledit réseau d'accès radio est une station de base primaire, MeNB, pour ledit équipement d'utilisateur, le procédé comprenant en outre l'étape consistant à
retarder, en réponse aux informations relatives à ladite tolérance de retard et à ladite priorité indiquant que lesdites données d'utilisateur MT ont une faible priorité, une transmission desdites données d'utilisateur MT jusqu'à ce que des ressources de réseau suffisantes soient libérées d'un trafic de données de priorité plus élevée.

3. Procédé selon la revendication 2, dans lequel ledit équipement d'utilisateur est en outre relié à une station de base secondaire, SeNB, le procédé comprenant en outre l'étape consistant à
exécuter la transmission desdites données d'utilisateur MT audit équipement d'utilisateur via ladite station de base secondaire, SeNb.

4. Procédé selon la revendication 1, dans lequel lesdites informations relatives à ladite tolérance de retard et à ladite priorité comprennent en outre des informations concernant un temps d'expiration pour une livraison desdites données d'utilisateur MT.

5. Procédé selon la revendication 1, dans lequel lesdites informations relatives à ladite tolérance de retard et à ladite priorité comprennent en outre un indicateur de transfert pour des données d'utilisateur MT de faible priorité, le procédé comprenant en outre les étapes consistant à
transmettre, sur l'équipement d'utilisateur effectuant un transfert à partir de la première station de base primaire vers une seconde station de base primaire, lesdites informations relatives à ladite tolérance de retard et à ladite priorité et l'indicateur de transfert à la seconde station de base primaire, et
en réponse à la seconde station de base primaire fournissant des ressources de réseau suffisantes pour transmettre les données d'utilisateur MT à faible priorité, établir un support de liaison radio entre la seconde station de base primaire et l'équipement d'utilisateur pour initier une livraison des données d'utilisateur MT à faible priorité à partir du serveur cloud.

6. Procédé selon la revendication 1, dans lequel lesdites informations relatives à ladite tolérance de retard et à ladite priorité sont stockées dans une entité de réseau plane de commande du réseau cellulaire, comme dans une entité de gestion de mobilité, MME.

7. Procédé selon la revendication 1, comprenant en outre ledit équipement d'utilisateur
déterminant, sur la base desdites informations obtenues à partir du serveur cloud, la tolérance de retard et la priorité pour le au moins un support de liaison radio pour transmettre lesdites données d'utilisateur MT ; et
envoyant les informations relatives à ladite tolérance de retard et à ladite priorité pour le au moins un support de liaison radio à la station de base primaire sur demande de transmission desdites données d'utilisateur MT.

8. Appareil (251) comprenant au moins un processeur (253, 256), une mémoire (252) incluant un code de programme informatique (254), la mémoire (252) et le code de programme informatique (254) étant configurés pour, avec le au moins un processeur (253, 256), amener l'appareil (251) à au moins :
obtenir des informations à partir d'un serveur cloud relié fonctionnellement à un réseau cellulaire de telle sorte que ledit serveur cloud comprend des données d'utilisateur aboutissant à un mobile, MT, pour ledit appareil **caractérisé par** l'appareil étant configuré pour :
obtenir des informations relatives à une tolérance de retard et à une priorité pour au moins un support de liaison radio pour recevoir lesdites données d'utilisateur MT via un élément de réseau d'un réseau d'accès radio dudit réseau cellulaire.

9. Appareil (251) selon la revendication 8, dans lequel ledit appareil (251) est configuré pour recevoir lesdites données d'utilisateur MT via une station de base primaire, MenB, du réseau d'accès radio, dans lequel
une réception desdites données d'utilisateur MT est retardée, en réponse aux informations relatives à ladite tolérance de retard et à ladite priorité indiquant que lesdites données d'utilisateur MT ont une faible priorité, jusqu'à ce que des ressources de réseau suffisantes soient libérées du trafic de données de priorité plus élevée.

10. Appareil (251) selon la revendication 8, dans lequel lesdites informations relatives à ladite tolérance de retard et à ladite priorité comprennent en outre des informations concernant un temps d'expiration pour une livraison desdites données d'utilisateur MT.

11. Appareil (251) selon la revendication 8, dans lequel lesdites informations relatives à ladite tolérance de retard et à ladite priorité comprennent en outre des informations relatives à des types de cellule ou des identités de cellule via lesquel(le)s l'appareil peut recevoir lesdites données d'utilisateur MT.

12. Elément de réseau (230, 231, CN) d'un réseau d'accès radio configuré pour obtenir des informations provenant d'un serveur cloud relié de manière fonctionnelle à un réseau cellulaire de telle sorte que ledit serveur cloud comprend des données d'utilisateur aboutissant à un mobile, MT, à des données d'utilisateur d'équipement utilisateur,
**caractérisé en ce que** l'élément de réseau est configuré pour
obtenir des informations relatives à une tolérance de retard et à une priorité pour au moins un support de liaison radio pour transmettre lesdites données d'utilisateur MT audit équipement d'utilisateur.

13. Elément de réseau (230, 231, CN) selon la revendication 12, dans lequel ledit élément de réseau a une station de base primaire, MeNB, (230) pour ledit équipement d'utilisateur, l'élément de réseau (230, 231, CN) étant configuré pour
retarder la transmission desdites données d'utilisateur MT, en réponse aux informations relatives à ladite tolérance de retard et à ladite priorité indiquant que lesdites données d'utilisateur MT ont une faible priorité, jusqu'à ce que des ressources de réseau suffisantes soient libérées d'un trafic de données de priorité plus élevée.

14. Elément de réseau (230, 231, CN) selon la revendication 12, dans lequel l'élément de réseau est configuré pour
déterminer, sur la base de modèles de mobilité de l'équipement d'utilisateur, des informations d'assistance pour retarder la transmission des données d'utilisateur MT/MO.

15. Elément de réseau (230, 231, CN) selon la revendication 12, dans lequel l'élément de réseau (230, 231, CN) est configuré pour
fournir, en réponse à une attente des ressources de réseau suffisantes pour la transmission de données d'utilisateur MT/MO, à l'équipement d'utilisateur un signalement pour transférer l'équipement d'utilisateur dans un mode de connexion dégradé concernant des ressources radio ; et
mettre à jour le mode connexion ou établir un nouveau support de liaison radio pour la transmission de données d'utilisateur MT/MO lorsque des ressources de réseau suffisantes sont disponibles.
